# EUROPÄISCHE PATENTANMELDUNG

(11) **EP 1 818 203 A1**
(43) Veröffentlichungstag der Anmeldung: **15.08.2007**
(21) Anmeldenummer: 07001810.6
(22) Anmeldetag: 27.01.2007
(51) Int. Cl.: B60J 10/04

(54) **Dichtungselement für eine Sichtscheibe**

(30) Priorität: 09.02.2006 DE 102006006229
(71) Anmelder: Magna Car Top Systems GmbH, 74321 Bietigheim-Bissingen (DE)
(72) Erfinder: Anders, Jens, 31094 Marienhagen (DE)

(57) **Zusammenfassung**

Ein Dichtungselement (6) für eine rahmenlose, bewegbare Sichtscheibe (5) in einem Kraftfahrzeug weist zwei separate, an einem zentralen Dichtungskörper (7) angeordnete und einander zugewandte Dichtlippen (11,12) auf, die einen Dichtungsaufnahmeraum (10) zur Aufnahme einer Stirnkante (5a) der Sichtscheibe (5) begrenzen. Bei eingeführter Sichtscheibe (5) übergreift eine Dichtlippe (11) die Stirnkante (5a).

## Beschreibung

Die Erfindung bezieht sich auf ein Dichtungselement für eine rahmenlose, bewegbare Sichtscheibe nach dem Oberbegriff des Anspruches 1.

In der DE 101 31 774 C1 wird ein derartiges Dichtungselement beschrieben, welches in den Fensterrahmen eines Kraftfahrzeuges eingesetzt wird und in Schließposition eine verstellbare Seitenscheibe des Kraftfahrzeuges aufnimmt, wodurch ein wasserdichter Abschluss geschaffen wird. Das Dichtungselement besteht aus einem zentralen Dichtungskörper, in den ein metallisches Trägerelement eingebracht ist, und zwei an dem zentralen Dichtungskörper angeordneten und einander zugewandten Dichtlippen, wobei die beiden Dichtlippen und eine Seite des Dichtungskörpers einen Dichtungsaufnahmeraum begrenzen, in den im geschlossenen Zustand die obere Kante der Sichtscheibe einragt. Die beiden Dichtlippen liegen an den Seitenwänden der Dichtscheibe an, um einen wind- und wasserdichten Abschluss zwischen Innen- und Außenseite der Scheibe zu schaffen und ein Eindringen von Feuchtigkeit und Geräuschen zu verhindern.

Von diesem Stand der Technik ausgehend liegt der Erfindung die Aufgabe zugrunde, mit einfachen Maßnahmen ein Dichtungselement für eine rahmenlose, bewegbare Sichtscheibe in einem Kraftfahrzeug zu schaffen, bei dem auch unter hohen Belastungen, die beispielsweise bei schneller Fahrt durch den Fahrtwind auftreten können, ein wasser- und winddichter Abschluss zwischen Dichtelement und Sichtscheibe gewährleistet ist.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Dichtelement übergreift eine der beiden Dichtlippen bei in den Dichtungsaufnahmeraum eingeschobener Sichtscheibe die Stirnkante der Sichtscheibe und erstreckt sich somit sowohl über eine Seitenwand der Scheibe als auch über die Stirnkante. Dadurch ist im Vergleich zu Ausführungen aus dem Stand der Technik ein zusätzlicher linienförmiger Kontakt zwischen dieser Dichtlippe und der einragenden Sichtscheibe gegeben, wodurch die Dichtigkeit gegen Wind und Schwallwasser verbessert wird. Da die Dichtlippen jeweils als separate Bauteile mit freien Stirnseiten ausgeführt sind, ist zugleich gewährleistet, dass die Sichtscheibe mit nur geringer Kraft in den Dichtungsaufnahmeraum eingefahren werden kann. Auch die verhältnismäßig lang ausgeführte, die Stirnkante der Sichtscheibe übergreifende Dichtlippe kann aus ihrer nicht beaufschlagten Ausgangsposition in die von der Dichtscheibe beaufschlagte Dichtposition verstellt werden kann. Die übergreifende Dichtlippe bietet trotz der großen Dichtwirkung einen nur geringen Widerstand gegen das Einschieben der Sichtscheibe in den Dichtungsaufnahmeraum. Da zugleich die zweite Dichtlippe an der gegenüberliegenden Seitenwandung der Sichtscheibe anliegt, ist der in den Dichtungsaufnahmeraum einragende Abschnitt der Sichtscheibe sowohl an den beiden sich gegenüberliegenden Seitenwänden als auch an seiner Stirnkante von Dichtmaterial des Dichtungselementes unmittelbar eingeschlossen.

Diese Verbindung bietet außerdem Sicherheit gegen unerwünschte Verformungen, die beispielsweise bei hohen Belastungen wie zum Beispiel großer Fahrtwind bei hohen Geschwindigkeiten des Fahrzeugs auftreten können. Der übergreifende Abschnitt der Dichtlippe verhindert auch bei hohen, auf das Dichtungselement einwirkenden Kräften eine die Dichtwirkung beeinträchtigende Verformung.

Die übergreifende Dichtlippe ist zweckmäßig mindestens doppelt so lang wie die zweite Dichtlippe ausgebildet, sie kann gegebenenfalls auch noch länger sein, beispielsweise drei- oder viermal so lang. Dies ermöglicht es, dass die übergreifende Dichtlippe nicht nur an einer Seitenwand der Sichtscheibe und an der Stirnkante anliegt, sondern auch an der gegenüberliegenden, zweiten Seitenwand der Sichtscheibe, und dort insbesondere in Kontakt mit der zweiten Dichtlippe gelangt, die ebenfalls an dieser Seitenwand der Sichtscheibe dichtend anliegt. Im Ergebnis wird eine dichtende Anlage an die beiden Seitenwände und an die Stirnkante der Sichtscheibe erreicht.

Um den Widerstand gegen die Einschubbewegung der Sichtscheibe in den Dichtungsaufnahmeraum hinein weiter zu verringern kann es zweckmäßig sein, in die übergreifende Dichtlippe eine Kuhle einzuformen, die zur Aufnahme der Stirnkante der Sichtscheibe ausgebildet ist. Die Sichtscheibe wird beim Schließen in diese Kuhle eingeschoben, wobei im Rahmen der Eigenelastizität des Dichtungsmaterials die übergreifende Dichtlippe sich bei fortschreitender Einschubbewegung der Sichtscheibe streckt und an die Wandungen und die Stirnkante der Sichtscheibe dichtend anlegt. Die Kuhle bietet außerdem den Vorteil, dass die Dichtlippe sich nur verhältnismäßig geringfügig verformen muss und dass hierdurch - neben dem geringeren Verformungswiderstand - auch die Gefahr einer unerwünschten Verformungsbewegung außerhalb der vorgesehenen Verformungsbahn deutlich reduziert ist.

Es kann zweckmäßig sein, in die übergreifende Dichtlippe ein oder mehrere verjüngte Wandabschnitte einzubringen, die die Funktion einer Sollbiegestelle haben, um die Verformungs- bzw. Anpassungsbewegung der übergreifenden Dichtlippe während des Einschiebens der Sichtscheibe zu erleichtern und in genau definierter Weise zu steuern. Diese Sollbiegestellen können sich im Verbindungsabschnitt zwischen Dichtlippe und zentralem Dichtungskörper des Dichtungselementes und gegebenenfalls auch nahe der die Stirnkante aufnehmenden Kuhle in der Dichtlippe befinden. Um ein linienförmiges Anliegen der Dichtlippe an die einragende Sichtscheibe sicherzustellen, befindet sich der verjüngte Wandabschnitt, der beispielsweise in Form einer Einkerbung ausgeführt sein kann, auf der der Sichtscheibe abgewandten Außenseite der Dichtlippe.

Am freien Ende der übergreifenden Dichtlippe kann ein Hakenelement ausgebildet sein, welches zweckmäßig in einen weiteren Abschnitt des Dichtungskörpers eingreift, wenn die Sichtscheibe vollständig in den Dichtungsaufnahmeraum einragt. Dieser Abschnitt des Dichtungselementes ist vorteilhaft als Aufnahmemulde ausgeführt, die an einer Seite von der zweiten Dichtlippe begrenzt wird. Da die zweite Dichtlippe durch die eingeführte Sichtscheibe verformt wird, wirkt diese Verformungsbewegung auch auf das Hakenelement in der Aufnahmemulde, das unter seiner Vorspannung an der der Scheibe abgewandten Seite an der zweiten Dichtlippe anliegt. Die Verformungsbewegung der zweiten Dichtlippe wirkt der Vorspannung der ersten Dichtlippe mit dem stirnseitig angeformten Hakenelement entgegen, wodurch eine Klemmwirkung auf das Hakenelement erzielt wird.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung eines Fahrzeugdaches eines Cabriolet-Fahrzeuges in der den Fahrzeuginnenraum überdeckenden Schließposition, mit hochgefahrener Seitenscheibe,
- Fig. 2: einen Schnitt durch ein Dichtungselement gemäß Schnittlinie II-II aus Fig. 1, wobei in den Dichtungskörper des Dichtungselementes ein Dichtungsaufnahmeraum eingebracht ist, der von zwei Dichtlippen begrenzt ist, von denen eine eine Kuhle zur Aufnahme der Stirnkante der einzufahrenden Sichtscheibe aufweist,
- Fig. 3: das Dichtungselement mit in den Dichtungsaufnahmeraum eingefahrener Sichtscheibe.

In den Figuren sind gleiche Bauteile mit gleichen Bezugszeichen versehen.

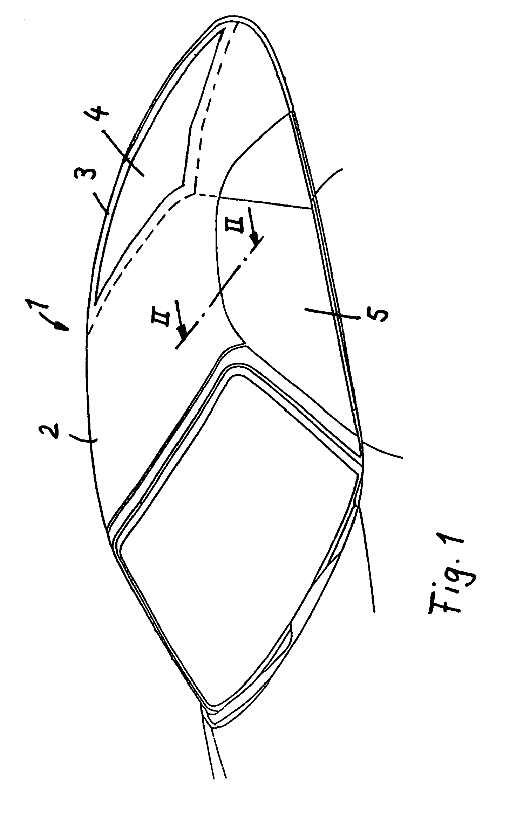

Bei dem in Fig. 1 dargestellten Fahrzeugdach 1 eines Kraftfahrzeuges handelt es sich um ein abklappbares Dach, das zwischen der gezeigten Schließposition, in der der Fahrzeuginnenraum überdeckt ist, und einer Ablageposition zu verstellen ist, in welcher das Fahrzeugdach in einem heckseitigen Ablageraum verstaut ist. Das Dach 1 besteht aus einem vorderen Dachteil 2 und einem hinteren Dachteil 3, wobei in das hintere Dachteil 3 zusätzlich eine Heckscheibe 4 integriert ist. Möglich ist sowohl eine Ausführung als Hardtop als auch eine Ausführung als Softtop.

Eine seitliche Sichtscheibe 5 ist zwischen einer hochgefahrenen Schließposition und einer abgesenkten Öffnungsposition zu verstellen. In Schließposition ragt die obere Stirnkante der Sichtscheibe in ein Dichtungselement dichtend ein, das in einem seitlichen, äußeren Abschnitt des vorderen Dachteiles integriert ist.

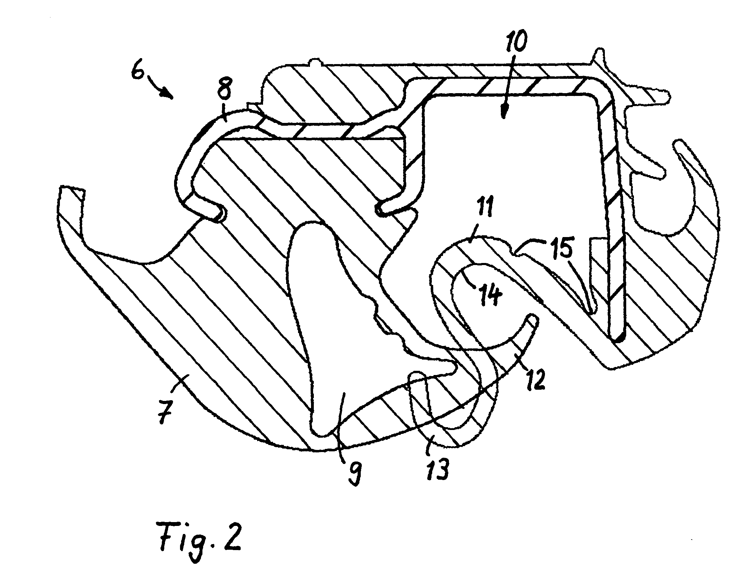

Dieses Dichtungselement ist in Fig. 2 gemäß der Schnittlinie II-II aus Fig. 1 dargestellt und mit Bezugszeichen 6 versehen. Das Dichtungselement 6 weist einen zentralen Dichtungskörper 7 auf, in den ein Trägerkörper 8 zur Stabilisierung und Stützung eingebracht ist, welcher aus einem anderen Material als das Dichtungsmaterial besteht, beispielsweise auch Blech, Metall oder auch Kunststoff oder Keramik oder dergleichen. In den Dichtungskörper 7 kann eine Ausnehmung 9 eingebracht sein, um die Nachgiebigkeit zu verbessern.

Des Weiteren ist in den Dichtungskörper 7 ein Dichtungsaufnahmeraum 10 für die Aufnahme der Stirnkante einer Sichtscheibe in Schließposition eingebracht. Im dargestellten Ausführungsbeispiel ist der Dichtungsaufnahmeraum 10 an drei Seiten von dem Trägerkörper 8 begrenzt; es kann aber auch zweckmäßig sein, an den den Aufnahmeraum 10 begrenzenden Wandungen Dichtungsmaterial vorzusehen. Die Öffnung des Dichtungsaufnahmeraumes 10 ist von zwei nachgiebigen Dichtlippen 11 und 12 verschlossen, die als separate Dichtlippen ausgebildet sind und von dem Dichtungskörper verzweigen. Jede Dichtlippe 11, 12 weist eine offene Stirnseite auf, die keine feste Verbindung zu einem weiteren Bauteil besitzt, so dass die Dichtlippen der einfahrenden Sichtscheibe einen nur verhältnismäßig geringen Widerstand entgegensetzen.

Die erste Dichtlippe 11 ist in der Weise geformt, dass ein mittlerer Abschnitt eine dem Dichtungsaufnahmeraum 10 abgewandte, U-förmige Kuhle 14 bildet, die an die Form der Stirnkante der einzugreifenden Sichtscheibe angepasst ist. Diese erste Dichtlippe 11 umgreift die Stirnkante der Sichtscheibe und ist im Verhältnis zur zweiten Dichtlippe 12 erheblich länger ausgebildet, die Länge beträgt etwa das Vierbis Fünffache der Länge der zweiten Dichtlippe 12.

Im Bereich ihrer freien Stirnseite weist die übergreifende Dichtlippe 11 ein Hakenelement 13 auf, welches die Vor- bzw. Eigenspannung der Dichtlippe 11 erhöht und bei in den Dichtungsaufnahmeraum 10 eingeschobener Sichtscheibe mit Spannkraft an einem Abschnitt des Dichtungselementes anliegt. Auf der dem Dichtungsaufnahmeraum 10 zugewandten Seite besitzt die übergreifende Dichtlippe 11 zwei Einkerbungen 15, von denen eine erste Einkerbung 15 unmittelbar an der Verzweigung der Dichtlippe 11 vom Dichtungskörper 7 und die zweite Einkerbung unmittelbar vor der Kuhle 14 angeordnet ist. Die Einkerbungen 15 bewirken eine Verjüngung des Wandabschnittes der Dichtlippe und haben die Funktion einer Sollbiegestelle, wodurch sichergestellt ist, dass sich die übergreifende Dichtlippe 11 beim Einschieben der Sichtscheibe an die Seitenwände sowie die Stirnkante der Sichtscheibe anlegt.

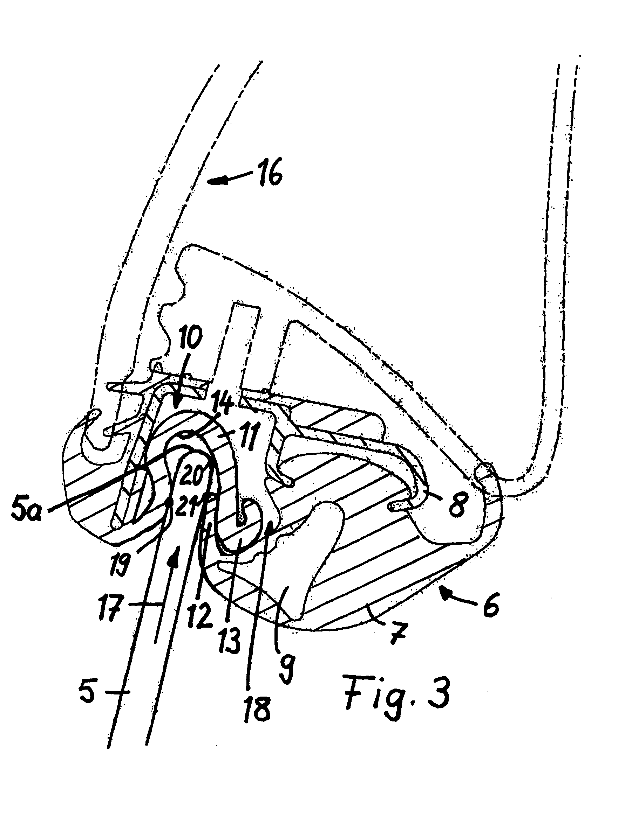

In Fig. 3 ist das Dichtungselement 6 in Einbaulage an einem Rahmenteil 16 des Fahrzeugdaches dargestellt. Die Sichtscheibe 5 wird in Pfeilrichtung 17 in den Aufnahmeraum 10 im Dichtungselement 6 eingeschoben. Die Stirnkante 5a der Sichtscheibe gelangt hierbei in Anlage mit der Kuhle 14 in der übergreifenden Dichtlippe 11, die durch die Einschubbewegung der Sichtscheibe in Richtung auf den begrenzenden Boden des Dichtungsaufnahmeraumes 10 verschoben wird, jedoch nicht am Boden anliegt. An einer Seitenwand der Sichtscheibe 5 liegt entlang einer Dichtlinie 19 die übergreifende Dichtlippe 11 an, eine weitere Dichtlinie 20 zwischen übergreifender Dichtlippe 11 und Scheibe 5 gibt es an der Stirnkante der Scheibe. Die zweite Dichtlippe 12 liegt mit einer weiteren Dichtlinie 21 an der gegenüberliegenden Seitenwand der Dichtscheibe 5 an. Das Hakenelement 13 am stirnseitigen Bereich der ersten Dichtlippe 11 liegt an der der Sichtscheibe abgewandten Rückseite der zweiten Dichtlippe 12 mit Vorspannung an.

Das Hakenelement 13 an der Stirnseite der übergreifenden Dichtlippe 11 befindet sich in einer Aufnahmemulde 18, die an zwei Seiten von dem Dichtungskörper 7 und an einer weiteren Seite von der zweiten Dichtlippe 12 begrenzt wird, die von der einragenden Sichtscheibe 5 zurück gebogen wird und gegen die Vorspannkraft des Hakenelements drückt. Die erste Dichtlippe 11 erfährt hierdurch eine Stabilisierung.

Die beschriebene Ausführung der die Stirnkante der Scheibe übergreifenden Dichtlippe 11 bietet zum einen den Vorteil, dass eine zusätzliche Dichtlinie an der Stirnkante gegeben ist, wodurch die Dichtigkeit verbessert wird. Zum andern ist wegen der großen Länge der übergreifenden Dichtlippe trotz der verbesserten Dichtigkeit eine hohe Beweglichkeit gewährleistet, so dass nur geringe Einschubkräfte erforderlich sind, um die Sichtscheibe einzuschieben, und außerdem ein Toleranzausgleich gegenüber unterschiedlichen Einschubwinkeln gegeben ist, unter denen die Sichtscheibe in das Dichtungselement eingeführt werden kann, beispielsweise bei

## Patentansprüche

1. Dichtungselement für eine rahmenlose, bewegbare Sichtscheibe in einem Kraftfahrzeug, mit zwei separaten, an einem zentralen Dichtungskörper (7) angeordneten und einander zugewandten Dichtlippen (11, 12), die einen Dichtungsaufnahmeraum (10) zur Aufnahme einer Stirnkante (5a) der Sichtscheibe (5) in der Weise begrenzen, dass bei eingeführter Sichtscheibe (5) die Dichtlippen (11, 12) an den Seitenwänden der Sichtscheibe (5) anliegen,
**dadurch gekennzeichnet,**
**dass** eine Dichtlippe (11) bei eingeführter Sichtscheibe (5) die Stirnkante (5a) der Sichtscheibe (5) übergreift.

2. Dichtungselement nach Anspruch 1,
**dadurch gekennzeichnet,**
**dass** die übergreifende Dichtlippe (11) an beiden Seitenwänden der Sichtscheibe (5) anliegt.

3. Dichtungselement nach Anspruch 1 oder 2,
**dadurch gekennzeichnet,**
**dass** bei eingeführter Sichtscheibe (5) die übergreifende Dichtlippe (11) an der zweiten Dichtlippe (12) berührend anliegt.

4. Dichtungselement nach einem der Ansprüche 1 bis 3,
**dadurch gekennzeichnet,**
**dass** die übergreifende Dichtlippe (11) eine Kuhle (14) zur Aufnahme der Stirnkante (5a) der Sichtscheibe (5) aufweist.

5. Dichtungselement nach einem der Ansprüche 1 bis 4,
**dadurch gekennzeichnet,**
**dass** in die Wandung der übergreifenden Dichtlippe (11) ein verjüngter Wandabschnitt eingebracht ist, der eine Sollbiegestelle bildet.

6. Dichtungselement nach Anspruch 5,
**dadurch gekennzeichnet,**
**dass** die Sollbiegestelle auf der zweiten Dichtlippe (12) abgewandten Seite der Kuhle (14) eingebracht ist.

7. Dichtungselement nach einem der Ansprüche 1 bis 6,
**dadurch gekennzeichnet,**
**dass** bei vollständig in den Dichtungsaufnahmeraum (10) einragender Sichtscheibe (5) die Dichtlippen (11, 12) entlang von Dichtlinien (19, 20, 21) an der Sichtscheibe (5) anliegen.

8. Dichtungselement nach Anspruch 7,
**dadurch gekennzeichnet,**
**dass** die übergreifende Dichtlippe (11) entlang einer Dichtlinie (20) an der Stirnkante (5a) der Sichtscheibe (5) anliegt.

9. Dichtungselement nach einem der Ansprüche 1 bis 8,
**dadurch gekennzeichnet,**
**dass** am freien Ende der übergreifenden Dichtlippe (11) ein Hakenelement (13) ausgebildet ist, das bei einragender Sichtscheibe (5) an einem Abschnitt des Dichtungselements (6) anliegt.

10. Dichtungselement nach Anspruch 9,
**dadurch gekennzeichnet,**
**dass** das Hakenelement (13) an der zweiten Dichtlippe (12) anliegt.

11. Dichtungselement nach Anspruch 9 oder 10,
**dadurch gekennzeichnet,**
**dass** das Hakenelement (13) in einen Aufnahmemulde (18) einragt, dessen eine Seite von der zweiten Dichtlippe (12) begrenzt ist.

12. Dichtungselement nach einem der Ansprüche 1 bis 11,
**dadurch gekennzeichnet,**
**dass** in den zentralen Dichtungskörper (7) ein Trägerkörper (8) eingebracht ist, der aus einem anderen Material als das Dichtungsmaterial gefertigt ist.
